# EUROPEAN PATENT SPECIFICATION

(11) **EP 3 308 922 B1**
(45) Date of publication and mention of the grant of the patent: **10.06.2020**
(21) Application number: 17196244.2
(22) Date of filing: 12.10.2017
(51) Int. Cl.: B29C 31/06, B29C 45/18, B29K 105/00

(54) **DOSING APPARATUS**
DOSIERGERÄT
APPAREIL DE DOSAGE

(30) Priority: 13.10.2016 IT 201600102755
(43) Date of publication of application: 18.04.2018
(73) Proprietor: Piovan S.P.A., 30036 Santa Maria di Sala (VE) (IT)
(72) Inventor: BELLIO, Enrico, 31050 Ponzano V.to (Treviso) (IT)
(74) Representative: Pandolfi, Paolo

(56) References cited:
- EP-A1- 1 891 139
- EP-A1- 2 818 235
- DE-A1- 2 510 963
- JP-A- H10 315 269
- JP-A- S59 214 605

## Description

The invention relates to a dosing apparatus for dosing products in granular and/or microgranular and/or flake form and/or in powder.

In particular, the invention relates to a dosing apparatus for dosing plastics and/or additives for plastics in plants for treating and/or transforming and/or conveying plastics and/or additives for plastics, for example extruding and subsequent injection moulding, blowing, compression plants, or dehumidifying and/or drying plants.

Dosing apparatuses are known comprising a hopper, for containing products in granular and/or microgranular and/or flake form and/or in powder, provided with a dosing conduit for exiting the products.

Such known apparatuses further comprise a gate shutter, positioned at a dosing opening of the dosing conduit.

The gate shutter is movable between an open position and a closed position of the dosing opening itself such as to allow or prevent exiting of such products, in a controlled manner, from the hopper.

Downstream of the gate shutter, in the advancement direction of the products, a containing element is positioned, included in the plant for treating and/or transforming and/or conveying plastics and/or additives for plastics, which containing element is intended for receiving the dosed product from the dosing apparatus.

In normal use of the dosing apparatuses, it is often necessary to empty the hopper completely.

The hopper has to be emptied completely, for example, before a change of production, or for a product change, or for cleaning or maintaining the hopper.

In the apparatuses disclosed above, for emptying the hopper, it is known to position first the gate shutter in the closed position of the dosing opening.

Subsequently, an operator positions himself at the height of an inlet of the hopper and sucks, for example with a flexible hose, a volume of product present inside the hopper above the gate shutter.

It should be noted that this operation requires the use of special equipment and is particularly dangerous, on the one hand because of the height from the ground at which the operator operates and on the other hand because of the danger of the operator coming into contact with movable parts of the dosing apparatus, in particular with the gate shutter, with the consequent risk of shearing.

In order to reduce the volume of product to be discharged from the hopper, and thus the time that is necessary to empty the hopper, dosing apparatuses have been proposed that are provided with a discharge conduit connected to a discharge opening obtained on a side wall of the hopper at a certain distance from the dosing opening. In such dosing apparatuses, a further manually operated gate shutter is also provided that is positioned upstream of the dosing opening, i.e. further upstream, in the advancement direction of the product, than the gate shutter positioned at the dosing opening itself.

This reduces the volume of product that remains in the hopper, but does not eliminate the need for the operator to intervene in the manner previously disclosed.

JPS59214605A discloses an apparatus capable of metering and delivering plastic materials, by arranging, inside a container whose inside is divided into two sections, metering rotating bodies having recessed sections and contact members for closing gaps between a casing and the rotating bodies.

EP1891139A1 describes a device for increasing the limiting viscosity of polyester materials by means of solid phase polycondensation, comprising a heatable reaction container, wherein the polyester material can be left to dwell at a predetermined thermal treatment temperature for a predetermined dwell time until it has a desired limiting viscosity, and a cooling container which is arranged downstream from the reaction container. The cooling container is embodied such that it can cool the polyester material, which is distributed by the reaction container, to a cooling temperature which is lower than the reaction temperature. A polyester material separator is arranged downstream from the cooling container and is embodied in such a manner that the polyester material flow is diverted to a polyester material processing machine and/or to an intermediate storage container.

A drawback of known dosing apparatuses is that they make emptying the hopper particularly slow, laborious and hazardous.

An object of the present invention is to improve dosing apparatuses for dosing plastics and/or additives per plastics in granular and/or microgranular and/or flake and/or similar form, in particular dosing apparatuses for dosing plastics and/or additives per plastics in plants for treating and/or transforming and/or conveying plastics and/or additives for plastics, for example extruding and subsequent injection moulding, blowing, compression plants, or dehumidifying and/or drying plants.

Another object is to make a dosing apparatus that enables a respective hopper to be emptied rapidly, simply and securely.

These objects and still others are achieved by a dosing apparatus according to one or more of the claims set out below.

The invention can be better understood and implemented with reference to the attached drawings that illustrate an embodiment thereof by way of non-limiting example, in which:
- figure 1 is a cross section of a dosing apparatus according to the invention in a first operating configuration;
- figure 1A is an enlarged detail of figure 1;
- figure 2 is a cross section of the dosing apparatus according to the invention in a second operating configuration;
- figure 2A is an enlarged detail of figure 2;
- figure 3 is a perspective view of a conveying element included in the dosing apparatus of figure 1; and
- figure 4 is a perspective view of a discharge conduit included in the dosing apparatus of figure 1.

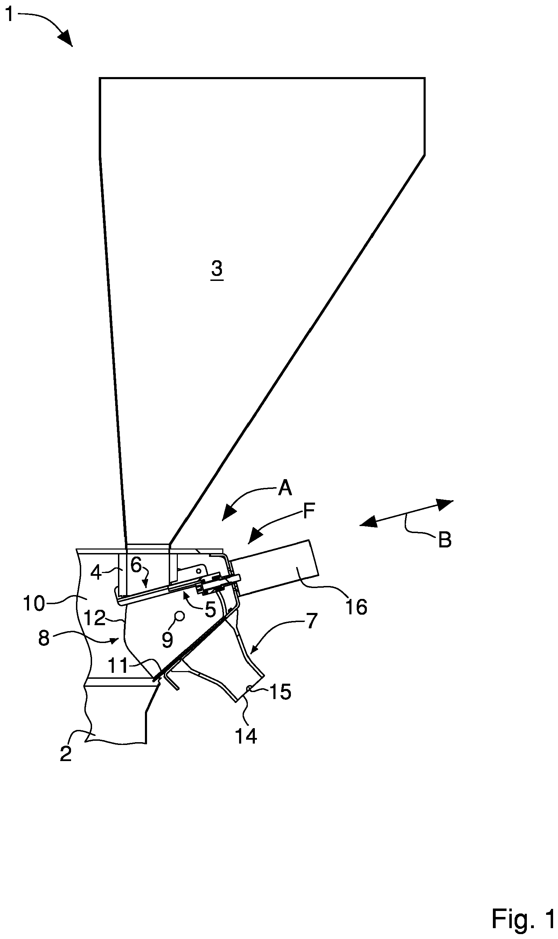

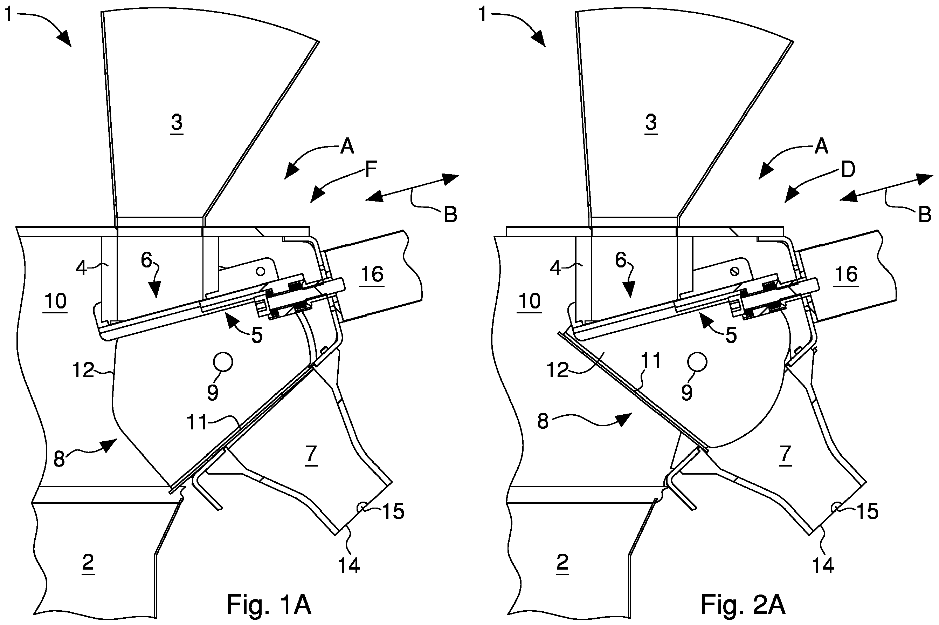

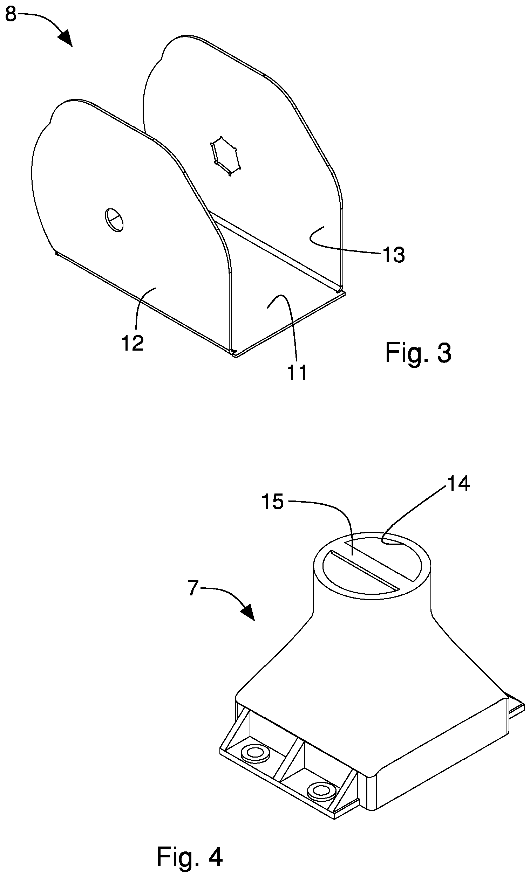

With reference to figures 1 to 4, a dosing apparatus 1 according to the invention is illustrated that is arranged for dosing products in granular and/or microgranular and/or flake form and/or in powder, in particular for dosing plastics and/or additives for plastics, in a containing element 2, included in a plant, which is not illustrated, for treating and/or transforming and/or conveying plastics and/or additives for plastics, for example an extrusion and subsequent injection moulding, blowing, compression plant, or a dehumidifying and/or drying plant.

The dosing apparatus 1 comprises a hopper 3 that is suitable for containing the products and is provided with a dosing conduit 4 for exiting the products; a shutter element 5, in particular a gate shutter, positioned at a dosing opening 6 of the dosing conduit 4, and movable along a movement direction B, by actuating means 16, between an open position A and a closed position C, which is not illustrated, of the dosing opening 6, so as to enable products to exit or prevent products from exiting, in a controlled manner, from the hopper 3; and a discharge conduit 7, positioned downstream, with respect to an advancement direction of the products in the dosing apparatus 1, of the shutter element 5, to discharge the products from the hopper 3, in particular for emptying the hopper 3.

Also, the dosing apparatus 1 comprises a conveying element 8, interposed between the shutter element 5 and the discharge conduit 7.

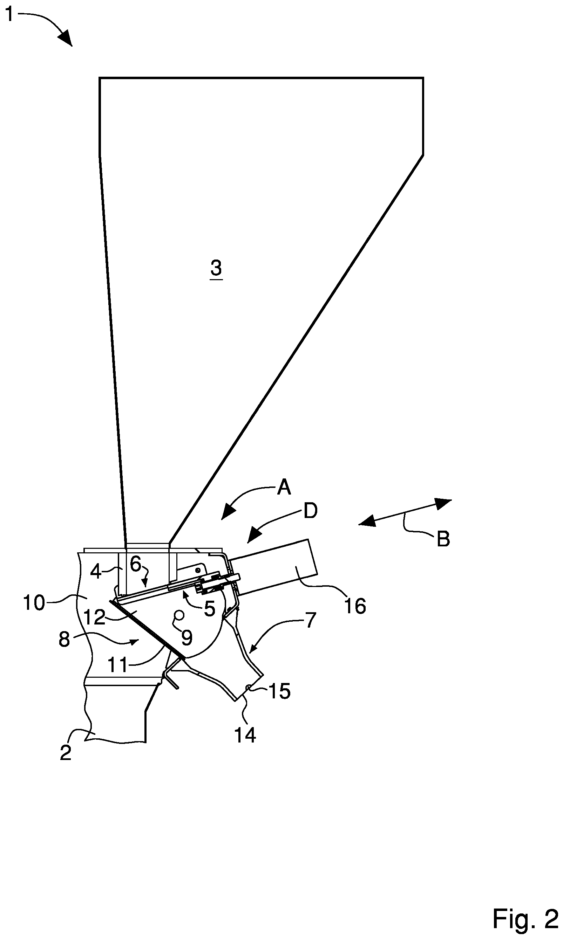

The conveying element 8 is movable between a supplying position F, illustrated in figures 1 and 1A, in which the conveying element 8 conveys the products from the dosing conduit 4 to the containing element 2, i.e. places the dosing conduit 4 in communication with the containing element 2, and an emptying position D, illustrated in figures 2 and 2A, in which the conveying element 8 conveys the products from the dosing conduit 4, i.e. places the dosing conduit 4 in communication with the discharge conduit 7.

The conveying element 8 is rotatably supported by a pin 9 connected to a supporting body 10 of the dosing apparatus 1, the supporting body 10 supporting the hopper 3.

More precisely, the pin 9 is positioned outside the dosing opening 6.

This enables the products, when the conveying element 8 is in the supplying position F, to flow towards the containing element 2 without intercepting the pin 9, and, owing to the conformation of the conveying element 8, in particular owing to the position of the centre of gravity thereof, causes the conveying element 8 to be positioned in the supplying position F.

Also, the conveying element 8 comprises a bottom wall 11, of substantially rectangular shape, and two side walls 12, 13, of substantially trapezium shape, the pin 9 extending between the side walls 12, 13.

It should be noted how this reduces the overall dimensions of the conveying element 8.

The conveying element 8 further comprises driving means, not shown, for rotating the conveying element 8 between the supplying position F and the emptying position D.

This driving means comprises manual driving means, for example a lever or a handle, fixed to a side wall 12, 13 of the conveying element 8.

In another embodiment of the invention, which is not illustrated, the driving means comprises motor-driven driving means, for example an electric or pneumatic motor, fixed to a side wall 12, 13 of the conveying element 8.

The aforesaid discharge conduit 7 has a shape converging towards the advancement direction of the products in the dosing apparatus 1, and comprises a discharge opening 14 intended for being connected to a flexible hose, which is not illustrated, in turn connected, at an opposite end thereto, to a collecting container, which is not shown, which is designed to receive the emptied product from the hopper 3.

The discharge opening 14, of circular shape, is provided with barrier means, for example comprising a bar 15 extending along a diameter of the discharge opening 14.

In another embodiment of the invention, which is not illustrated, the barrier means comprises a grating.

Also, the discharge conduit 7 is made of plastics, this reducing both the weight and the cost thereof.

It should be noted how the barrier means prevents access to the conveying element 8 and/or to the shutter element 5 by an operator, this making the operation of emptying the hopper 3 safer.

In use, to empty the hopper 3, it is sufficient to position the conveying element 8 in the emptying position D and subsequently the shutter element 5 in the open position A.

This permits rapid, complete and secure emptying of the hopper 3.

It should be noted how owing to the invention it is possible to empty rapidly and completely the hopper 3. This is owing to the position of the discharge conduit 7 downstream of the shutter element 5 and the presence therebetween of the conveying element 8.

Also, owing to the invention, it is not necessary to access an inner part of the hopper 3 to empty the hopper 3 itself, this making the operation of emptying the hopper 3 safer.

This operation is made even safer by the fact that the emptying operation is performed from the ground, without the need to have to access parts placed at a height.

Also, owing to the invention, it is possible to optimize the layout of a plant comprising one or more of the dosing apparatuses 1 according to the invention, inasmuch as it is possible to anticipate where to arrange, for each dosing apparatus 1, the collecting containers intended to receive the emptied product from the hopper 3.

## Claims

1. Dosing apparatus (1) for dosing products in granular and/or micro granular and/or flake form and/or in powder, in particular for dosing plastics and/or additives for plastics, in a containing element (2) included in a plant for treating and/or transforming and/or conveying plastics and/or additives for plastics, wherein the dosing apparatus (1) comprises:
- a hopper (3) for containing said products;
- a dosing conduit (4) for exiting said products from said hopper (3);
- a shutter element (5), positioned at a dosing opening (6) of said dosing conduit (4), which shutter element (5) is movable between an open position (A) and a closed position (C) of said dosing opening (6) so as to enable said products to exit or prevent said products from exiting said hopper (3); and
- a discharge conduit (7) for emptying said hopper (3) of said products;
wherein said discharge conduit (7) is positioned downstream, with respect to an advancement direction of said products in said dosing apparatus (1), of said shutter element (5), and wherein a conveying element (8) is provided, interposed between said shutter element (5) and said discharge conduit (7), wherein said conveying element (8) is movable between a supplying position (F), in which said conveying element (8) conveys said products from said dosing conduit (4) towards said containing element (2), and an emptying position (D), in which said conveying element (8) conveys said products from said dosing conduit (4) towards said discharge conduit (7), and wherein said conveying element (8) is rotatably supported by a pin (9) connected to a supporting body (10) of said dosing apparatus (1), **characterised in that** said pin (9) is positioned outside said dosing opening (6).

2. Apparatus (1) according to claim 1, wherein said conveying element (8) comprises a bottom wall (11) and two side walls (12, 13), wherein said pin (9) extends between said side walls (12, 13).

3. Apparatus (1) according to any one of claims 1 to 2, wherein said conveying element (8) comprises driving means for rotating said conveying element (8) between said supplying position (F) and said emptying position (D).

4. Apparatus (1) according to claim 3, wherein said driving means comprises manual driving means, in particular lever means fixed to a side wall (12, 13) of said conveying element (8), or motor-driven driving means.

5. Apparatus (1) according to any one of claims 1 to 4, wherein said discharge conduit (7) comprises a discharge opening (14) provided with barrier means (15) to prevent access to said conveying element (8) and/or to said shutter element (5).

6. Apparatus (1) according to any one of claims 1 to 5, wherein said discharge conduit (7) is made of plastics.

7. Plant for treating and/or transforming and/or conveying plastics and/or additives for plastics, comprising at least one dosing apparatus (1) according to any one of claims 1 to 6.

## Patentansprüche

1. Dosiervorrichtung (1) zum Dosieren von Produkten in granulärer und/oder mikrogranulärer und/oder Flockenform und/oder in Pulver, insbesondere zum Dosieren von Kunststoffen und/oder Additiven für Kunststoffe, in ein Fassungselement (2), das in einer Anlage für die Behandlung und/oder Transformation und/oder Beförderung von Kunststoffen und/oder Additiven für Kunststoffe enthalten ist, wobei die Dosiervorrichtung (1) umfasst:
- einen Trichter (3) zum Beinhalten der Produkte;
- eine Dosierleitung (4) für den Austritt der Produkte aus dem Trichter (3);
- ein Verschlusselement (5), das an einer Dosieröffnung (6) der Dosierleitung (4) angeordnet ist, wobei das Verschlusselement (5) zwischen einer offenen Position (A) und einer geschlossenen Position (C) der Dosieröffnung (6) beweglich ist, um zu ermöglichen, dass die Produkte austreten, oder zu verhindern, dass die Produkte aus dem Trichter (3) austreten; und
- eine Auslassleitung (7) zum Entleeren des Trichters (3) von den Produkten;
wobei die Auslassleitung (7) in Bezug auf eine Vorschubrichtung der Produkte in der Dosiervorrichtung (1) stromabwärts des Verschlusselements (5) angeordnet ist, und wobei ein Förderelement (8) vorgesehen ist, das zwischen das Verschlusselement (5) und die Auslassleitung (7) eingefügt ist, wobei das Förderelement (8) zwischen einer Zufuhrposition (F), in der das Förderelement (8) die Produkte aus der Dosierleitung (4) in Richtung des Fassungselements (2) befördert, und einer Entleerungsposition (D), in der das Förderelement (8) die Produkte aus der Dosierleitung (4) in Richtung der Auslassleitung (7) befördert, beweglich ist, und wobei das Förderelement (8) durch einen Zapfen (9) drehbar abgestützt ist, der mit einem Stützkörper (10) der Dosiervorrichtung (1) verbunden ist, **dadurch gekennzeichnet, dass** der Zapfen (9) außerhalb der Dosieröffnung (6) angeordnet ist.

2. Vorrichtung (1) nach Anspruch 1, wobei das Förderelement (8) eine Bodenwand (11) und zwei Seitenwände (12, 13) umfasst, wobei sich der Zapfen (9) zwischen den Seitenwänden (12, 13) erstreckt.

3. Vorrichtung (1) nach einem der Ansprüche 1 bis 2, wobei das Förderelement (8) eine Antriebseinrichtung zum Drehen des Förderelements (8) zwischen der Zufuhrposition (F) und der Entleerungsposition (D) umfasst.

4. Vorrichtung (1) nach Anspruch 3, wobei die Antriebseinrichtung eine manuelle Antriebseinrichtung, insbesondere eine Hebeleinrichtung, die an einer Seitenwand (12, 13) des Förderelements (8) befestigt ist, oder eine durch einen Motor angetriebene Antriebseinrichtung umfasst.

5. Vorrichtung (1) nach einem der Ansprüche 1 bis 4, wobei die Auslassleitung (7) eine Auslassöffnung (14) umfasst, die mit einer Barriereneinrichtung (15) versehen ist, um den Zugang zum Förderelement (8) und/oder zum Verschlusselement (5) zu verhindern.

6. Vorrichtung (1) nach einem der Ansprüche 1 bis 5, wobei die Auslassleitung (7) aus Kunststoffen besteht.

7. Anlage für die Behandlung und/oder Transformation und/oder Beförderung von Kunststoffen und/oder Additiven für Kunststoffe mit mindestens einer Dosiervorrichtung (1) nach einem der Ansprüche 1 bis 6.

## Revendications

1. Appareil de dosage (1) pour doser des produits sous forme granulaire et/ou sous forme microgranulaire et/ou de flocon et/ou de poudre, en particulier pour doser des plastiques et des additifs pour plastiques, dans un élément de conteneur (2) inclus dans une installation pour traiter et/ou transformer et/ou convoyer des plastiques et/ou des additifs pour plastiques, dans lequel l'appareil de dosage (1) comprend :
une trémie (3) pour contenir lesdits produits ;
un conduit de dosage (4) pour faire sortir lesdits produits de ladite trémie (3) ;
un élément obturateur (5), positionné à une ouverture de dosage (6) dudit conduit de dosage (4), lequel élément obturateur (5) est mobile entre une position ouverte (A) et une position fermée (C) de ladite ouverture de dosage (6) de manière à permettre auxdits produits de sortir ou d'empêcher lesdits produits de sortir de ladite trémie (3) ; et
un conduit d'évacuation (7) pour vider ladite trémie (3) desdits produits ;
dans lequel ledit conduit d'évacuation (7) est positionné en aval, par rapport à une direction d'avance desdits produits dans ledit appareil de dosage (1), dudit élément obturateur (5), et dans lequel un élément de convoyage (8) est prévu, interposé entre ledit élément obturateur (5) et ledit conduit d'évacuation (7), dans lequel ledit élément de convoyage (8) est mobile entre une position d'alimentation (F), dans laquelle ledit élément de convoyage (8) convoie lesdits produits dudit conduit de dosage (4) vers ledit élément de conteneur (2), et une position de vidage (D), dans laquelle ledit élément de convoyage (8) convoie lesdits produits à partir dudit conduit de dosage (4) vers ledit conduit d'évacuation (7), et dans lequel ledit élément de convoyage (8) est supporté en rotation par une goupille (9) reliée à un corps de support (10) dudit appareil de dosage (1), **caractérisé en ce que** ladite goupille (9) est positionnée à l'extérieur de ladite ouverture de dosage (6).

2. Appareil (1) selon la revendication 1, dans lequel ledit élément de convoyage (8) comprend une paroi de fond (11) et deux parois latérales (12, 13), dans lequel ladite goupille (9) s'étend entre lesdites parois latérales (12, 13).

3. Appareil (1) selon l'une quelconque des revendications 1 à 2, dans lequel ledit élément de convoyage (8) comprend des moyens d'entraînement pour faire tourner ledit élément de convoyage (8) entre ladite position d'alimentation (F) et ladite position de vidage (D).

4. Appareil (1) selon la revendication 3, dans lequel lesdits moyens d'entraînement comprennent des moyens d'entraînement manuel, en particulier des moyens à levier fixés à une paroi latérale (12, 13) dudit élément de convoyage (8), ou des moyens d'entraînement par moteur.

5. Appareil (1) selon l'une quelconque des revendications 1 à 4, dans lequel ledit conduit d'évacuation (7) comprend une ouverture d'évacuation (14) pourvu de moyens de barrière (15) pour empêcher un accès audit élément de convoyage (8) et/ou audit élément obturateur (5).

6. Appareil (1) selon l'une quelconque des revendications 1 à 5, dans lequel ledit conduit d'évacuation (7) est fait de plastique.

7. Installation pour traiter et/ou transformer et/ou convoyer des plastiques et/ou des additifs pour plastiques, comprenant au moins un appareil de dosage (1) selon l'une quelconque des revendications 1 à 6.
